# EUROPEAN PATENT SPECIFICATION

(11) **EP 1 990 126 B1**
(45) Date of publication and mention of the grant of the patent: **21.11.2012**
(21) Application number: 07107714.3
(22) Date of filing: 08.05.2007
(51) Int. Cl.: B23K 26/38, B23K 26/40, B23K 26/08

(54) **Method of laser cutting a painted or multilayered workpiece by means of a scanned laser beam**
Verfahren zum Laserschneiden eines bemalten oder mehr beschichteten Werkstückes unter Verwendung eines Skann-Laserstrahles
Methode de découpe laser d'une pièce peinte ou multicouches par balayage d'un faisceau laser

(43) Date of publication of application: 12.11.2008
(73) Proprietor: Volvo Car Corporation, 405 31 Göteborg (SE)
(72) Inventor: Palmquist, Niclas, 423 38 Torslanda (SE); Larsson, Helena, 442 43 Kungälv (SE)
(74) Representative: Valea AB

(56) References cited:
- WO-A-96/12830
- JP-A- 2003 117 670
- JP-A- 2006 026 670
- US-A- 3 742 182
- US-A- 5 847 960
- US-A1- 2002 033 384

## Description

The present application relates to a method of cutting a painted or multilayer work piece according to the preamble of claim 1 (see, for example, JP 2003/117670), wherein a laser beam having low average power and a high peak or pulse passes along the path to be cut a plurality of turns.

### BACKGROUND OF THE INVENTION

Laser cutting is a technology that uses a laser to cut materials, and is usually used in industrial manufacturing.

Laser cutting works by directing the output high power laser at the material to be cut. The material then either melts, burns or vaporizes away leaving an edge with a high quality surface finish.

Advantages of laser cutting over mechanical cutting vary according to the situation, but important factors are: lack of physical contact (since there is no cutting edge which can become contaminated by the material or contaminate the material), flexibility of cutting shapes and to some extent precision (since there is no wear on the laser). There is also a reduced chance of warping the material that is being cut as laser systems have a small heat affected zone. Some materials are also very difficult or impossible to cut by more traditional means.

Traditionally, sheet-metal (e.g. in car bodies) is cut before it is painted. This is due to the fact that most techniques available for cutting generate heat which has a damaging effect on the paint next to the cut edge. It is not uncommon that the different paint layers can separate from each other due to the elevated temperature next to the cut giving rise to a growth point of long term corrosion. Punching is one of the methods which can be used to produce holes in the already painted sheet-metal. However, the punching technique is difficult to realize in visible areas as there is a big risk for deformations in the car body. Laser cutting in painted material (e.g. painted car bodies) have a number of advantages. Many times it is not until the car body has been painted that the final customer is known and the accessories and extra equipment are decided. Body in White variants can be reduced to a minimum by cutting of optional holes, chosen by the final customer, such as holes for GPS navigation antennas, spoilers, rails, various plastic moldings etc., at the very last moment before the car leaves the manufacturing line, which in turn results in minimized storage areas prior to final assembly. Assembly and guiding holes can be cut on the completed and painted car body, eliminating geometrical stack-ups and misalignments of holes, creating a better fit of parts whilst also reducing manpower for assembly and adjustment.
However, when traditional laser cutting processes are used on painted materials, also a heat affected area next to the cut edge can sometimes be noticed.
An approach for preventing the formation of these growth points for corrosion is to use a laser having a low average power simultaneously with a high peak or pulse. The laser should also have a very high beam quality and scanning optics which will scan the laser beam along the intended cutting edge or seam. Multiple passes will create a cut while exerting a minimum amount of heat on the paint layers, thereby reducing the problem with long term corrosion.

### SUMMARY OF THE INVENTION

The present invention provides a method of cutting a painted or multi-layered work piece by means of a scanned laser beam according to claim 1.

In one embodiment of the invention the laser used is a Q-switched laser.

In one embodiment of the invention the laser used is a pulsed solid state laser.

In one embodiment of the invention the wavelength of the laser beam is 1000-1100 nm, more preferably between 1010-1070 nm.

In yet another embodiment of the invention the wavelength of the laser beam is 1030 nm for a Q switched laser.

In one embodiment of the invention the wavelength of the laser beam is 1064 nm for a pulsed solid state laser.

In one aspect of the invention the pulse duration for the pulsed solid state laser is 0.08 - 1.0 ms, more preferably 0.1-0.3 ms and most preferably 0.15 ms.

In one aspect of the invention the pulse duration for the Q-switched laser is 0.02-1.0 ms, more preferably 0.03-0.1 ms and most preferably 0.05 ms.

In one embodiment of the invention the pulse repetition rate for the pulsed solid state laser has a frequency of 0.1-1.5 kHz, more preferably between 0.1-0.5 kHz and most preferably a frequency of 250 Hz.

In one embodiment of the invention the pulse repetition rate for the Q-switched laser has a frequency of 10-30 kHz, more preferably a frequency of 15-25 kHz and most preferably a frequency of 20 kHz.

In one embodiment of the invention the average output energy is 65 W for the pulsed solid state laser.

In one embodiment of the invention the average output energy is 60 W for the Q-switched laser.

### BRIEF DESCRIPTION OF THE DRAWINGS (OPTIONAL)

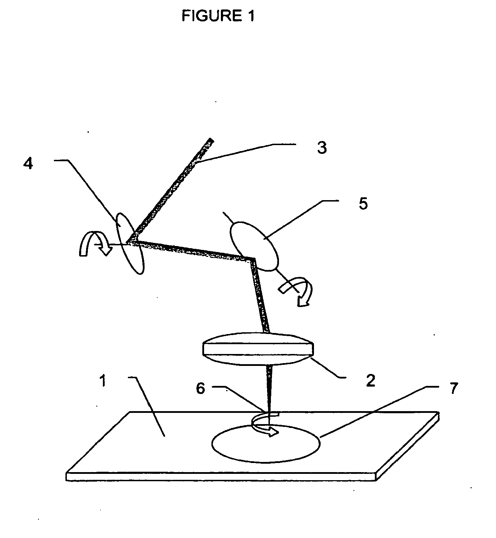

Fig. 1 shows a laser beam cutting a work piece according to the method of the invention.

### DETAILED DESCRIPTION OF THE INVENTION

In the following the invention will be described in more detail. However, the described embodiments mentioned below are only given as examples and should not be limiting to the present invention. Other solutions, uses, objectives, and functions within the scope of the invention as claimed in the below described patent claims should be apparent for the person skilled in the art.

By using a laser having a low average power simultaneously with a high peak or pulse and with very high beam quality and scanning optics, the laser beam is scanned along the intended cutting edge or seam. The desired shape or pattern to be cut can be obtained from a CAD-model or other suitable drawing program and should be programmed into a computer. The switching on and off of the laser beam is done with the computer and the laser light is directed by an optical fiber or beam tubes to the scanner optics which comprises one or more movable mirrors which can move the beam in one plane. The computer controls the scanner mirrors which direct the laser beam to follow the programmed pattern loaded into the computer. The mirrors are made from quartz glass which has been coated by a substance giving a surface which reflects the wavelength of the laser beam. The movable or oscillating mirror or mirrors are controlled by piezoelectric motors. If two mirrors are used the laser beam is directed in the x direction by one of the mirrors and in the y direction by the second mirror. By combining the movements of the two mirrors, the beam can move around in a plane and for example make a circular or a square hole. The laser beam can also be directed by one single mirror.

Due to the high pulse energy, a thin layer of material, initially coats of paint and later metal is removed by laser ablation during each passing of the laser beam. Multiple passes will eventually create a cut while exerting a minimum heat on the paint layers. The depth over which the laser energy is absorbed, and thus the amount of material removed by a single laser pulse, depends on the material's optical properties and the wavelength of the laser. Laser pulses can vary over a very wide range of duration (milliseconds to femtoseconds), and can be precisely controlled. Ablation depth is determined by the absorption depth of the material and the heat of vaporization of the work material. The depth is also a function of beam energy density, the laser pulse duration, and the laser wavelength. Suitable lasers can be pulsed lasers, usually used for laser marking or remote welding which have a relatively low duty cycle, or a continuous laser which is shuttered. However, in order to exert a minimal heat effect the pulsed laser is preferable. Suitable lasers can be a pulsed solid state laser such as HL 101P or a Q-switched laser.

There are several key parameters to consider for laser ablation. The first is selection of a wavelength with a minimum absorption depth. This will help ensure a high energy deposition in a small volume for rapid and complete ablation. Wavelengths used in the present invention are in the range of 1000 - 1100 nm, and more preferably between 1010-1070 nm. When a Q-switched laser is used the most preferred wavelength is 1030 nm and for a pulsed solid state laser the most preferred wavelength is 1064 nm.

The second parameter is the pulse duration, which has to be very short in order to maximize the peak power while the thermal conduction to the surrounding work material is kept at a minimum. This is analogous to a vibrating system where the mass is large and the forcing function is of high frequency. This combination will reduce the amplitude of the response. As soon as the laser beam hits the surface of the material, the material vaporizes immediately, which prevents heat transport to the surrounding material. For the pulsed solid state laser, short pulses in the range of 0.08 - 1.0 ms are used, more preferably pulses in the range of 0.1-0.3 ms and most preferably a pulse of 0.15 ms is used. For a Q-switched laser the pulse duration was shorter, 0.02-1.0 ms, more preferably 0.03-0.1 ms and most preferably a pulse of 0.05 ms was used.

The third parameter is the pulse repetition rate. If the rate is too low, all of the energy which was not used for ablation will leave the ablation zone allowing cooling. If the residual heat can be retained, thus limiting the time for conduction, by a rapid pulse repetition rate, the ablation will be more efficient. More of the incident energy will go toward ablation and less will be lost to the surrounding work material and the environment. For the pulsed solid state laser the optimal pulse frequency is between 0.1-1.5 kHz, more preferably between 0.1-0.5 kHz and most preferably a frequency of 250 Hz is used. For the Q-switched laser a frequency of between 10-30 kHz is suitable, more preferably a frequency of 15-25 kHz and most suitable is a frequency of 20 kHz.

The fourth parameter is the beam quality expressed as the Beam Parameter Product (BBP). Beam quality is measured by the brightness (energy), the focusability, and the homogeneity. In the present invention the BPP will be 1-15 mm x mrad for both types of lasers. The beam energy is of no use if it cannot be properly and efficiently delivered to the ablation region. Further, if the beam is not of a controlled size, the ablation region may be larger than desired with excessive slope in the sidewalls. The maximum pulse energy used in the present invention is 4 kW for the pulsed solid state laser, having an average pulse energy of 65 W. For the Q-switched laser a maximum pulse energy of 3 kW and average of 60 W was used. During the cutting procedure it can sometimes be noticed that the laser beam has difficulties cutting through the work piece. After a certain cutting depth is reached the walls of the cut cave in and the laser beam is not able to cut any deeper.

A method for cutting a painted or multi-layered work piece by means of a scanned laser beam is described with reference to figure 1. The method comprises the following steps:
1. The computer is loaded with the desired pattern obtained from a CAD-model or other suitable drawing program (not shown).
2. The painted work piece material or carbody (1) is placed in working area under the lens (2).
3. The laser is started whereby the laser beam (3) is directed towards the scanning mirrors (4, and 5).
4. The scanner mirror (4) or mirrors (4 and 5) direct the path for the laser beam (3) by means of a robot or indexing unit (not shown) according the preprogrammed pattern
5. The laser beam (3) passes repeatedly along the same preprogrammed path (7) on the work piece or carbody (1) until it has cut through material.

According to the present invention, in step 5, the laser beam moves with a superposed circular movement (6) a long the cutting line on the work piece.

### Example 1

A Q-switched laser was used for cutting a square hole 19 x19 mm in a 0.8 mm thick zinc coated sheet-metal covered with a100 µm paint layer using the above described method. The wavelength was set at 1030 nm, with a pulse frequency of 20 kHz, a pulse duration of 0.05 ms and the laser beam had an average effect of 60 W. The laser beam required 72 revolutions which took 32 seconds before the beam cut through the work material. The cut edge was smooth and had no visible signs of deformations or heat affected areas in the paint when the edge was examined under a microscope at x25 enlargement.

### Example 2

The same Q-switched laser ,having the same parameters as in Example 2 were used to cut a square hole 19 x 19 mm in a 0.8 mm thick zinc coated sheet metal covered with a 400 µm thick paint layer. Also in this example the laser beam required 72 revolutions or 32 seconds to cut through the work material.

## Claims

1. A method of cutting a painted or multi-layered work piece by means of a scanned laser beam comprising the following steps:
a) loading a computer with the desired pattern obtained from a CAD-model or other suitable drawing program; and
b) placing the painted or multi-layered work piece material (1) under the lens (2); and
c) starting the laser whereby the laser beam (3) is directed towards the scanning mirror (4) or mirrors (4) and (5); and said method being **characterized by**
d) directing the path for the laser beam (3) by the scanner mirror (4) or mirrors (4) and (5) according to a preprogrammed pattern,
e) passing the laser beam (3) repeatedly along the same preprogrammed path (7) on the work piece (1) while moving in a superposed circular movement (6), until it has cut through the work piece material.

2. A method according to claim 1, wherein the laser beam (3) is provided by a Q-switched laser.

3. A method according to claim 1, wherein the laser beam (3) is provided by a pulsed solid state laser.

4. A method according to claim 1, wherein the laser beam (3) provides a wavelength that is 1000 -1100 nm, more preferably between 1010 -1070 nm.

5. A method according to claim 2, wherein the laser beam (3) provides a wavelength that is 1030 nm.

6. A method according to claim 3, wherein the laser beam (3) provides a wavelength that is 1064 nm.

7. A method according to claim 3, wherein the pulsed solid state laser provides a pulse duration that is 0.08 - 1.0 ms, more preferably 0.1-0.3 ms and most preferably 0.15 ms.

8. A method according to claim 2, wherein the Q-switched laser provides a pulse duration that is 0.02-1.0 ms, more preferably 0.03-0.1 ms and most preferably 0.05 ms.

9. A method according to claim 3, wherein the pulsed solid state laser provides a pulse repetition rate that has a frequency of 0.1-1.5 kHz, more preferably between 0.1-0.5 kHz and most preferably a frequency of 250 Hz.

10. A method according to claim 2, wherein the Q-switched laser provides a pulse repetition rate that has a frequency of 10-30 kHz, more preferably a frequency of 15-25 kHz and most preferably a frequency of 20 kHz.

11. A method according to claim 3, wherein the pulsed solid state laser provides an average output energy of 65 W.

12. A method according to claim 2, wherein the Q-switched laser provides an average output energy of 60 W.

## Patentansprüche

1. Verfahren zum Schneiden eines lackierten oder mehrschichtigen Werkstücks mittels eines abgetasteten Laserstrahls, das die folgenden Schritte umfasst:
a) Laden eines Computers mit dem von einem CAD-Modell oder einem anderen geeigneten Zeichenprogramm erhaltenen gewünschten Muster; und
b) Anordnen des lackierten oder mehrschichtigen Werkstückmaterials (1) unter der Linse (2); und
c) Starten des Lasers, wodurch der Laserstrahl (3) auf den Abtastspiegel (4) oder die Abtastspiegel (4) und (5) hin gerichtet wird; wobei das Verfahren **gekennzeichnet ist durch**
d) Richten des Pfads für den Laserstrahl (3) **durch** den Abtastspiegel (4) oder die Abtastspiegel (4) und (5) gemäß einem vorprogrammierten Muster,
e) Leiten des Laserstrahls (3) wiederholt entlang desselben vorprogrammierten Pfades (7) an dem Werkstück (1) unter kreisförmiger Überlagerungsbewegung (6), bis er das Werkstückmaterial durchschnitten hat.

2. Verfahren nach Anspruch 1, wobei der Laserstrahl (3) durch einen gütegeschalteten Laser geliefert wird.

3. Verfahren nach Anspruch 1, wobei der Laserstrahl (3) durch einen gepulsten Festkörperlaser geliefert wird.

4. Verfahren nach Anspruch 1, wobei der Laserstrahl (3) eine Wellenlänge liefert, die 1000-1100 nm beträgt, stärker bevorzugt zwischen 1010 und 1070 nm liegt.

5. Verfahren nach Anspruch 2, wobei der Laserstrahl (3) eine Wellenlänge liefert, die 1030 nm beträgt.

6. Verfahren nach Anspruch 3, wobei der Laserstrahl (3) eine Wellenlänge liefert, die 1064 nm beträgt.

7. Verfahren nach Anspruch 3, wobei der gepulste Festkörperlaser eine Impulsdauer liefert, die 0,08-1,0 ms, stärker bevorzugt 0,1-0,3 ms und am stärksten bevorzugt 0,15 ms beträgt.

8. Verfahren nach Anspruch 2, wobei der gütegeschaltete Laser eine Impulsdauer liefert, die 0,02-1,0 ms, stärker bevorzugt 0,03-0,1 ms und am stärksten bevorzugt 0,05 ms beträgt.

9. Verfahren nach Anspruch 3, wobei der gepulste Festkörperlaser eine Impulswiederholrate liefert, die eine Frequenz von 0,1-1,5 kHz, stärker bevorzugt zwischen 0,1-0,5 kHz, besitzt und am stärksten bevorzugt eine Frequenz von 250 Hz besitzt.

10. Verfahren nach Anspruch 2, wobei der gütegeschaltete Laser eine Impulswiederholrate liefert, die eine Frequenz von 10-30 kHz, stärker bevorzugt eine Frequenz von 15-25 kHz und am stärksten bevorzugt eine Frequenz von 20 Hz besitzt.

11. Verfahren nach Anspruch 3, wobei der gepulste Festkörperlaser eine mittlere Ausgangsenergie von 65 W liefert.

12. Verfahren nach Anspruch 2, wobei der gütegeschaltete Laser eine mittlere Ausgangsenergie von 60 W liefert.

## Revendications

1. Procédé de découpe d'une pièce à usiner peinte ou multi-couche, au moyen d'un faisceau laser à balayage comprenant les étapes suivantes :
(a) charger dans un ordinateur la forme désirée obtenue d'un modèle CAO ou de tout autre programme de dessin approprié ; et
(b) mettre en place le matériau (1) de la pièce à usiner peinte ou multi-couche sous la lentille (2) ;
et
(c) mettre en marche le laser, le faisceau laser (3) étant dirigé vers le miroir (4) ou les miroirs (4) et (5) à balayage ; et ledit procédé étant
***caractérisé par*** les étapes consistant à
(d) diriger le trajet du faisceau laser (3) avec le miroir (4) ou les miroirs (4) et (5) à balayage selon une forme préprogrammée,
(e) faire passer de manière répétée le faisceau laser (3) le long du même trajet préprogrammé (7) sur la pièce (1) à usiner tout en exécutant un mouvement circulaire superposé (6) jusqu'à ce qu'il ait traversé le matériau de la pièce à usiner.

2. Procédé selon la revendication 1, dans lequel le faisceau laser (3) est fourni par un laser déclenché.

3. Procédé selon la revendication 1, dans lequel le faisceau laser (3) est fourni par un laser pulsé à l'état solide.

4. Procédé selon la revendication 1, dans lequel le faisceau laser (3) donne une longueur d'onde de 1000 à 1100 nm, de manière préférée entre 1010 et 1070 nm.

5. Procédé selon la revendication 2, dans lequel le faisceau laser (3) donne une longueur d'onde de 1030 nm.

6. Procédé selon la revendication 3, dans lequel le faisceau laser (3) donne une longueur d'onde de 1064 nm.

7. Procédé selon la revendication 3, dans lequel le laser pulsé à l'état solide offre une durée d'impulsion de 0,08 à 1,0 ms, de manière préférée de 0,1 à 0,3 ms, et de manière très préférée de 0,15 ms.

8. Procédé selon la revendication 2, dans lequel le laser déclenché offre une durée d'impulsion de 0,02 à 1,0 ms, de manière préférée de 0,03 à 0,1 ms, et de manière très préférée de 0,05 ms.

9. Procédé selon la revendication 3, dans lequel le laser pulsé à l'état solide offre un taux de répétition des impulsions qui a une fréquence de 0,1 à 1,5 kHz, de manière préférée entre 0,1 et 0,5 kHz, et de manière très préférée une fréquence de 250 Hz.

10. Procédé selon la revendication 2, dans lequel le laser déclenché offre un taux de répétition des impulsions qui a une fréquence de 10 à 30 kHz, de manière préférée une fréquence de 15 à 25 kHz et de manière très préférée une fréquence de 20 kHz.

11. Procédé selon la revendication 3, dans lequel le laser pulsé à l'état solide fournit une énergie moyenne en sortie de 65 W.

12. Procédé selon la revendication 2, dans lequel le laser déclenché fournit une énergie moyenne en sortie de 60 W.
